# EUROPÄISCHE PATENTSCHRIFT

(11) **EP 3 501 074 B1**
(45) Veröffentlichungstag und Bekanntmachung des Hinweises auf die Patenterteilung: **21.08.2024**
(21) Anmeldenummer: 18712570.3
(22) Anmeldetag: 19.03.2018
(51) Int. Cl.: H02H 9/00, H02H 9/04, H02H 3/06

(54) **ÜBERSPANNUNGSSCHUTZ**
OVERVOLTAGE PROTECTOR
PROTECTION CONTRE LES SURTENSIONS

(30) Priorität: 21.03.2017 DE 102017204695
(43) Veröffentlichungstag der Anmeldung: 26.06.2019
(73) Patentinhaber: Ellenberger & Poensgen GmbH, 90518 Altdorf (DE)
(72) Erfinder: BÖSCHE, Dirk, 38536 Seershausen (DE); WILKENING, Ernst-Dieter, 38108 Braunschweig (DE)
(74) Vertreter: FDST Patentanwälte
(86) Internationale Anmeldenummer: PCT/EP2018/056912
(87) Internationale Veröffentlichungsnummer: WO 2018/172295

(56) Entgegenhaltungen:
- WO-A1-2018/041452
- WO-A1-98/45919
- DE-C1- 19 811 269
- US-B2- 7 561 394

## Beschreibung

Die Erfindung betrifft sowohl einen Überspannungsschutz zur Absicherung eines zu schützenden Geräts, mit einem ersten Anschluss und mit einem zweiten Anschluss als auch eine Schaltung mit einem zu schützenden Gerät und mit einem Überspannungsschutz. Die Erfindung betrifft ferner die Verwendung eines Überspannungsschutzes sowie ein Verfahren zum Betrieb eines Überspannungsschutzes.

Elektrische Geräte weisen üblicherweise eine elektrische Nennspannung auf, bei der diese betrieben werden. Sofern diese Nennspannung signifikant überstiegen wird, ist eine Beschädigung des elektrischen Geräts möglich. Ein Übersteigen der Nennspannung tritt beispielsweise aufgrund eines technischen Defekts des elektrischen Geräts oder eines sonstigen Bestandteils des Stromkreises auf, dessen Bestandteil das elektrische Gerät ist. Zur Absicherung des elektrischen Geräts gegenüber derartigen elektrischen Spannungen werden üblicherweise Sicherungen oder Schutzschalter verwendet.

Ferner ist es erforderlich, dass elektrische Geräte gegen eine Überspannung gesichert werden, die beispielsweise aufgrund eines Blitzschlages in eine Leitung des Stromkreises oder das elektrische Gerät selbst entstehen. Auch ist es möglich, dass innerhalb des Stromkreises aufgrund einer induktiven Kopplung eines Bestandteils des Stromkreises mit einem Blitz eine derartige Überspannung entsteht. Zudem können aufgrund von elektromagnetischen Pulsen (EMP) oder aufgrund elektrostatischer Entladungen (ESD) sowie Schaltvorgängen in dem Stromkreis derartige Überspannungen entstehen, die zu einer Beschädigung des Geräts führen können. Derartige Überspannungen übersteigen in einem vergleichsweise großen Masse die Nennspannung. Auch entstehen die Überspannungen aufgrund externer Ereignisse und sind daher durch das elektrische Gerät nicht beeinflussbar und können deswegen nicht vermieden werden

Zur Absicherung des elektrischen Geräts gegen Überspannungen wird ein Überspannungsschutz herangezogen, der parallel zu dem zu schützenden Gerät geschaltet wird. Der Überspannungsschutz selbst weist beispielsweise eine Funkenstrecke oder einen Varistor auf. Hierbei wird die Überspannung um das zu schützende Gerät herumgeleitet, wobei beispielsweise ein Lichtbogen erzeugt wird. Die Funkenstrecke und der Varistor unterliegen Alterungseffekten, sodass nach einer bestimmten Zeitdauer die elektrische Spannung variiert, ab der der Überspannungsschutz anspricht. Auch führen auftretende Überspannungen zu einem Verschleiß des Überspannungsschutzes. Infolgedessen ist nicht sichergestellt, dass sämtliche Überspannungen, die zu einer Beschädigung des Geräts führen könnten, stets mittels des Überspannungsschutzes abgefangen werden. Somit muss der Überspannungsschutz nach bestimmten Zeitspannen ausgetauscht werden, um eine bestimmungsgemäße Funktionsweise zu gewährleisten.

Aus DE 198 11 269 C1 ist eine Schaltungsanordnung mit einer Schutzschaltung bekannt. Hierbei sind bei einem Beispiel zu einer Steuerschaltung mehrere Stränge mit jeweils einem Widerstand und einem nachgeordneten Schaltelement parallel geschaltet.

Aus WO 98/45919 A1 ist ein Überspannungsschutz zur Vermeidung einer Beschädigung aufgrund einer Überspannung wegen z.B. eines Blitzes bekannt. Bei einer Ausführungsform sind mehrere Energiemodule vorhanden, die jeweils mehrere zueinander parallel geschaltet Varistoren aufweisen.

Die nachveröffentlichte WO 2018/041452 A1, die somit Stand der Technik nach Art. 54 (3) EPÜ darstellt, zeigt eine Trennvorrichtung mit einem Schalter und mit einem parallel zu dem Schalter geschalteten Spannungsbegrenzer. Der Spannungsbegrenzer weist eine Anzahl an zueinander parallel geschalteten Strängen auf, wobei jeder Strang einen Widerstand aufweist.

In US 7,561,394 B2 ist ein Überspannungsschutzsystem offenbart. Mehrere Stränge mit jeweils einem Widerstand und einem Schalter sind zueinander parallel geschaltet.

Der Erfindung liegt die Aufgabe zugrunde, einen besonders geeigneten Überspannungsschutz sowie eine besonders geeignete Schaltung als auch eine besonders geeignete Verwendung eines Überspannungsschutzes und ein besonders geeignetes Verfahren zum Betrieb eines Überspannungsschutzes anzugeben, wobei insbesondere eine Sicherheit erhöht und vorzugsweise Herstellungs- und/oder Betriebskosten gesenkt sind.

Hinsichtlich des Überspannungsschutzes wird diese Aufgabe durch die Merkmale des Anspruchs 1, hinsichtlich der Schaltung durch die Merkmale des Anspruchs 7, hinsichtlich der Verwendung durch die Merkmale des Anspruchs 8 und hinsichtlich des Verfahrens durch die Merkmale des Anspruchs 9 erfindungsgemäß gelöst. Vorteilhafte Weiterbildungen und Ausgestaltungen sind Gegenstand der Unteransprüche.

Der Überspannungsschutz dient der Absicherung eines zu schützenden Geräts, insbesondere der elektrischen Absicherung. Mit anderen Worten wird mittels des Überspannungsschutzes eine Überspannung an dem zu schützenden Gerät oder ein durch das zu schützende Gerät fließender Impulsstrom vermieden. Hierfür ist der Überspannungsschutz zweckmäßigerweise geeignet, vorgesehen und/oder eingerichtet. Die Überspannung/der Impulsstrom entsteht unabhängig von dem Überspannungsschutz und dem zu schützenden Gerät, insbesondere durch ein externes Ereignis, wie einen Blitzschlag. Die Überspannung/der Impulsstrom ist insbesondere derart, dass diese das zu schützenden Gerät beschädigen würde, und mittels des Überspannungsschutzes wird zweckmäßigerweise die an dem zu schützenden Gerät anliegende elektrische Spannung begrenzt. Vorzugsweise fungiert der Überspannungsschutz als Ableiter und ist beispielsweise ein Überspannungs- und/oder Blitzstromableiter.

Die Überspannung ist beispielsweise eine Wechselspannung oder eine Gleichspannung, und/oder der Impuls-/Blitzstrom ist ein Gleichstrom oder ein Wechselstrom. Beispielsweise weist die Überspannung eine Frequenz größer 500 Hz, 800 Hz oder 900 Hz auf. Zweckmäßigerweise ist die Frequenz größer oder gleich 1 kHz, 1,5 kHz, 2 kHz, 5 kHz oder 10 kHz. Insbesondere ist die Frequenz kleiner oder gleich 10 MHz, 5 MHz oder 1 MHz. Insbesondere ist der Überspannungsschutz geeignet, bevorzugt vorgesehen und eingerichtet, einen Nennstrom zu tragen, der größer oder gleich 100 A, 300 A, 500 A, 800 A, 2 kA, 3 kA, 5 kA, 10 kA, 12 kA, 17 kA, 20 kA, 22 kA, 25 kA oder 30 kA ist. Unter tragbarem Strom wird insbesondere derjenige elektrische Strom verstanden, der mittels des Überspannungsschutzes geführt werden kann, ohne dass hierdurch eine Beschädigung hervorgerufen wird.

Beispielsweise ist der Überspannungsschutz geeignet, insbesondere vorgesehen und eingerichtet, vor einer Überspannung zu schützen, die größer oder gleich 100 V, 200 V, 300 V, 400 V oder 500 V ist. Beispielsweise ist die maximale Überspannung 1.100 V, 1.000 V, 900 V oder 800 V, insbesondere sofern der elektrische Strom ein Wechselstrom ist. Sofern der elektrische Strom ein Gleichstrom ist, ist die maximale Überspannung geeigneterweise kleiner oder gleich 2.000 V, 1.800 V, 1.500 V, 1.200V oder 1.000 V.

Mittels des Überspannungsschutzes wird beispielsweise ein Freiluftgerät abgesichert, also ein Gerät, welches im Außenbetrieb verwendet wird. Insbesondere ist das Gerät stationär. Beispielsweise ist das Gerät ein Transponder, wie ein Mobilfunktransponder. Derartige Mobilfunktransponder sind meistens an exponierten Positionen angeordnet und unterliegen daher der Gefahr eines Blitzschlages oder zumindest der Gefahr eines Ausgesetztseins einer Überspannung aufgrund eines Blitzschlages.

Der Überspannungsschutz weist einen ersten Anschluss und einen zweiten Anschluss auf, von denen jeder im Montagezustand mit dem zu schützendes Gerät elektrisch kontaktiert ist. Im Überspannungsfall (Überspannungsereignis) liegt zwischen dem ersten Anschluss und dem zweiten Anschluss die Überspannung an.

Zwischen den ersten Anschluss und den zweiten Anschluss ist eine Anzahl an Strängen zueinander parallel geschaltet. Mit anderen Worten sind die Stränge zueinander parallel geschaltet und jeweils mit dem ersten Anschluss und dem zweiten Anschluss elektrisch kontaktiert. Mit anderen Worten sind die beiden Anschlüsse mittels der Stränge elektrisch kontaktiert und das zu schützende Gerät ist vorzugsweise mittels der Stränge überbrückt.

Jeder der Stränge weist einen Widerstand auf, und zumindest einer der Stränge umfasst ein Schaltelement, das in Reihe zu dem Widerstand des Strangs geschaltet ist. Mit anderen Worten weist dieser Strang den Widerstand und das Schaltelement auf, wobei das Schaltelement und der Widerstand in Reihe geschaltet sind. Diese Reihenschaltung ist im Montagezustand insbesondere parallel zu dem zu schützenden Gerät geschaltet. Die Widerstände der Stränge sind zweckmäßigerweise ohmsche Widerstände und weisen vorzugsweise einen Widerstand von mindestens 1 mOhm, 5 mOhm, 10 mOhm, 50 mOhm, 100 mOhm, 500 mOhm, 1 Ohm, 2 Ohm, 5 Ohm, 10 Ohm, 20 Ohm, 50 Ohm, 100 Ohm, 200 Ohm, 500 Ohm, 1 kOhm, 2 kOhm, 5 kOhm oder 10 kOhm auf. Der Widerstand ist bevorzugt kleiner oder gleich 1 kOhm, 500 Ohm oder 100 Ohm. Vorzugsweise umfasst der Überspannungsschutz 2 Stränge, 3 Stränge oder 5 Stränge. Insbesondere ist die Anzahl der Stränge größer oder gleich 2 Stränge, 3 Stränge oder 4 Stränge. Zum Beispiel ist die Anzahl der Stränge kleiner oder gleich 20 Stränge oder 10 Stränge.

Mittels der Stränge wird die zwischen den beiden Anschlüssen anfallende elektrische Spannung begrenzt. Hierbei ist die elektrische Spannung vorzugsweise derart begrenzt, dass eine Beschädigung des zu schützenden Geräts unterbunden ist. Infolgedessen ist eine Sicherheit erhöht. Auch ist der Überspannungsschutz mittels einer vergleichsweise geringen Anzahl von kostengünstigen elektrischen Bauelementen realisierbar, was Herstellungskosten senkt. Auch unterliegen diese vergleichsweise geringen Alterungseffekten, sodass der Überspannungsschutz über einen vergleichsweise lange Zeitdauer einen sicheren Schutz vor einer bestimmten Überspannung gewährleistet. Mittels des Schaltelements ist es ermöglicht, einen Stromfluss in dem das Schaltelement aufweisenden Strang zu unterbinden und folglich den elektrischen Widerstand des Überspannungsschutzes einzustellen. Infolgedessen kann die über dem zu schützenden Gerät anfallende elektrische Spannung mittels des Überspannungsschutzes eingestellt und begrenzt werden, was eine Sicherheit erhöht. Auch kann der Überspannungsschutz für unterschiedliche Anforderungen herangezogen werden.

Zweckmäßigerweise wird das Schaltelement in Abhängigkeit der Überspannung und/oder eines Impuls-/Blitzstroms betätigt. Geeigneterweise wird das Schaltelement in einen elektrischen leitenden Zustand versetzt, wenn die Überspannung bzw. der Impuls-/Blitzstrom erfasst wird, bzw. diese auftreten/anliegen. Zusammenfassend kann mittels des Schaltelements der elektrische Widerstand des Überspannungsschutzes angepasst werden, sodass eine über den Überspannungsschutz und somit zwischen den beiden Anschlüssen anfallende elektrische Spannung angepasst werden kann. Hierbei ist mittels der Anzahl der Stränge sowie mittels Wahl des jeweiligen Widerstands eine Skalierbarkeit des Überspannungsschutzes gegeben, sodass diese auf unterschiedlichste elektrische Spannungen und/oder elektrische Ströme angepasst werden kann. Folglich ist ein Einsatzbereich des Überspannungsschutzes vergrößert.

Das Schaltelement ist insbesondere ein Halbleiterschaltelement, beispielsweise ein Transistor, wie ein Feldeffekttransistor, insbesondere ein MOSFET. Beispielsweise ist das Schaltelement ein Feldeffekttransistor, ein Sperrschicht-Feldeffekttransistor (JFET) oder ein MOSFET. Da die Überspannung auf die Stränge aufgeteilt ist, liegt an dem Schaltelement eine verringerte elektrische Spannung an, weswegen ein vergleichsweise kostengünstiges Schaltelement herangezogen werden kann.

Jeder Strang weist ein derartiges Schaltelement auf. Hierbei sind die Schaltelemente der Stränge beispielsweise baugleich. Alternativ oder in Kombination hierzu sind die Schaltelemente auf den Widerstand des jeweiligen Strangs angepasst. Jeder Strang weist zusammenfassend sowohl den Widerstand als auch das Schaltelement auf, die zueinander in Reihe geschaltet sind. Aufgrund der Schaltelemente ist somit eine Skalierbarkeit des Überspannungsschutzes vergrößert, sodass der elektrische Widerstand des Überspannungsschutzes und folglich die zwischen den beiden Anschlüssen anliegende elektrische Spannung mittels der Schaltelemente eingestellt werden kann. Insbesondere sind die Stränge baugleich. Mit anderen Worten weisen sowohl sämtliche Widerstände den gleichen ohmschen Widerstand auf, und sämtliche Schaltelemente sind vom gleichen Typ. Zumindest jedoch sind die Stränge schaltungsgleich. Mit anderen Worten umfasst jeder Strang die gleiche Art an elektrischen und/oder elektronischen Bauteilen, wobei jedoch die jeweiligen Spezifikationen unterschiedlich sein können. Die elektrischen und/oder elektronischen Bauteile sind hierbei in der gleichen Art miteinander verschaltet. Geeigneterweise ist der ohmsche Widerstand der einzelnen Widerstände der Stränge unterschiedlich. Sofern der Überspannungsschutz eine Anzahl an Strängen aufweist, sind hierbei die Werte des ohmschen Widerstands vorzugsweise um jeweils ein bestimmtes konstantes Vielfaches erhöht. Das Vielfache ist insbesondere ein ganzzahliges Vielfaches und zum Beispiel zwei oder drei. Geeigneterweise weist somit jeweils einer der Stränge einen ohmschen Widerstand von 20 Ohm, 40 Ohm, 80 Ohm,... bzw. 20 Ohm, 60 Ohm, 180 Ohm,... auf, sofern der kleinste Widerstand jeweils einen ohmschen Widerstand von 20 Ohm aufweist. Auf diese Weise ist eine vergleichsweise präzise Einstellung der zwischen den zwei Anschlüssen anliegenden elektrischen Spannung ermöglicht. Zudem sind Herstellungskosten aufgrund der Verwendung von Gleichteilen reduziert.

Jedes Schaltelement weist einen Steuereingang auf, mittels dessen eine Schaltstellung des Schaltelements beeinflusst werden kann. Mit anderen Worten wird mittels Ansteuerung des Steuereingangs der Schaltzustand des Schaltelements beeinflusst, und dieses folglich in einen leitenden oder einen elektrisch nicht leitenden Zustand versetzt. Das Schaltelement ist zweckmäßigerweise elektrisch leitend, sofern an dem Steuereingang ein Signal anliegt, also sofern dieses angesteuert wird. Der Steuereingang jedes der Schaltelemente ist gegen einen Ausgang jeweils eines Oder-Logikschalters geführt, insbesondere direkt. Mit anderen Worten ist der Steuereingang dieses Schaltelements elektrisch direkt bzw. signaltechnisch direkt mit dem Ausgang des jeweiligen Oder-Logikschalters kontaktiert.

Jeder Oder-Logikschalter weist ferner einen ersten Eingang auf, der gegen den ersten Anschluss geführt ist, also mit dem ersten Anschluss verbunden ist. Hierbei ist der erste Eingang beispielsweise direkt oder über ein weiteres elektrisches und/oder elektronisches Bauteil gegen den ersten Anschluss geführt, insbesondere über eine Auslöseschaltung. Geeigneterweise weist der erste Eingang dann einen Pegel auf, wenn zwischen dem ersten Anschluss und dem zweiten Anschluss die Überspannung anliegt. Mit anderen Worten ist der erste Eingang derart mit dem ersten Anschluss verbunden, dass dieser den Pegel aufweist, wenn zwischen dem ersten Anschluss und dem zweiten Anschluss die Überspannung anliegt. Hierfür ist der erste Eingang beispielsweise zusätzlich mit dem zweiten Anschluss verbunden, insbesondere indirekt.

Alternativ hierzu ist der Oder-Logikschalter über eine Erfassungsschaltung mit dem ersten Anschluss verbunden, wobei die Erfassungsschaltung derart ausgebildet und/oder eingestellt ist, dass bei der auftretenden Überspannung der erste Eingang den Pegel aufweist. Somit werden die Schaltelemente in elektrisch leitenden Zustand versetzt, falls die Überspannung anliegt. Infolgedessen sind sämtliche Stränge stromführend, und die zwischen den Anschlüssen anliegende elektrische Spannung ist aufgrund der Parallelschaltung der Stränge, die elektrisch leitend sind, begrenzt. Somit wird das zu schützende Gerät, welches parallel zu den Strängen geschaltet ist, vor der Überspannung geschützt.

Der Überspannungsschutz weist ein Schieberegister auf, das eine Anzahl an Ausgängen aufweist, wobei die Anzahl der Ausgänge zweckmäßigerweise gleich der Anzahl der Schaltelemente ist. Bei Betrieb des Schieberegisters werden zweckmäßigerweise sukzessive die Ausgänge angesteuert, wobei insbesondere stets höchstens einer der Ausgänge zu jedem Zeitpunkt angesteuert ist. Ein zweiter Eingang jedes Oder-Logikschalters ist gegen jeweils einen der Ausgänge des Schieberegisters geführt, insbesondere direkt. Sofern an einem der Eingänge des jeweiligen Oder-Logikschalters ein Pegel anliegt, liegt vorzugsweise auch an dem Ausgang des jeweiligen Oder-Logikschalters ein Pegel an. Folglich ist der Oder-Logikschalter aktiv, sofern ein aktives Signal an einem dessen beider Eingänge anliegt. Lediglich, wenn weder an dem ersten noch an dem zweiten Eingang ein aktives Signal (Pegel) anliegt, ist auch der Ausgang des Oder-Logikschalters nicht aktiv. Die Oder-Logikschalter sind insbesondere baugleich und vorzugsweise Oder-Gatter.

Wenn mittels des Schieberegisters das Ausgangssignal von einem der Ausgänge (erster Ausgang) zu einem anderen der Ausgänge (zweiter Ausgang) geschoben wird, wird insbesondere das Schaltelement, dessen Steuereingang mit dem ersten Ausgang kontaktiert ist, in den elektrisch nicht leitenden Zustand versetzt. Das Schaltelement hingegen, dessen Steuereingang mit dem zweiten Ausgang kontaktiert ist, bleibt vorzugsweise in einem elektrisch leitenden Zustand oder wird in den elektrisch leitenden Zustand versetzt. Infolgedessen ist der elektrische Widerstand des Überspannungsschutzes erhöht.

Somit werden die Schaltelemente dann aktiviert, wenn entweder die Überspannung anliegt oder der jeweils zugeordnete Oder-Logikschalter mittels des Schieberegisters angesteuert wird. Insbesondere erfolgt ein Schließen sämtlicher Schaltelemente, sobald die Überspannung vorherrscht. Im Anschluss hieran wird zweckmäßigerweise das Schieberegister aktiviert, und sukzessive die Schaltelemente betätigt. Hierbei liegt zweckmäßigerweise die Überspannung nicht mehr zwischen den beiden Anschlüssen an, so dass mittels der Ansteuerung des Schieberegisters die Schaltelemente angesteuert werden. Mit anderen Worten liegt an dem ersten Eingang jedes Oder-Logikschalters kein Pegel mehr an, und lediglich über dem zweiten Eingang wird das Schaltelement angesteuert.

Das Schieberegister weist zusammenfassend eine Anzahl an Ausgängen auf, von denen jeder mit einem Oder-Logikschalter verbunden ist, und die geeigneterweise nummeriert sind. Der erste Ausgang des Schieberegisters entspricht insbesondere einem Kanal 1, und der zweite Ausgang entspricht insbesondere einem Kanal 2. Besonders bevorzugt ist ein Startausgang des Schieberegisters frei. Der Startausgang entspricht insbesondere einem Kanal 0 und befindet sich vor dem ersten Ausgang. Insbesondere befindet sich der erste Ausgang zwischen dem Startausgang und dem zweiten Ausgang. Der Startausgang ist nicht belegt, und es ist kein elektrisches oder elektronisches Bauteil an diesem angeschlossen. Folglich ist der Startausgang elektrisch lose und kein weiteres oder elektronisches Bauteil ist mit diesem elektrisch kontaktiert. Folglich befinden sich im Normalzustand die Schaltelemente in dem elektrisch nicht leitenden Zustand, und der elektrische Widerstand des Überspannungsschutzes ist vergleichsweise groß. Daher ist bei einer Fehlfunktion des Schieberegisters oder sonstiger Bestandteile des Spannungsregisters ein ungewollter elektrischer Stromfluss über den Überspannungsschutz im Wesentlichen ausgeschlossen, auch wenn die zwischen den Anschlüssen anfallende elektrische Spannung vergleichsweise groß ist. Bei Aktivierung des Schieberegisters wird vorzugsweise der Startausgang angesteuert. Erst wenn das Schieberegister ein Signal erhält, wird die Ansteuerung des Startausgangs beendet und die Ansteuerung des ersten Ausgangs aufgenommen, sodass dann ein Pegel (Signal) an einem der Oder-Logikschalter anliegt.

Zweckmäßigerweise umfasst das Schieberegister einen Reset-Eingang. Mittels einer Ansteuerung des Reset-Eingangs wird das Schieberegister in einen definierten Zustand gebracht. Insbesondere erfolgt eine Aktivierung des Startausgangs des Schieberegisters, sofern an dem Reset-Eingang ein Signal anliegt. Zweckmäßigerweise ist ein Endausgang des Schieberegisters gegen den Reset-Eingang geführt. Der Endausgang des Schieberegisters ist insbesondere derjenige Ausgang des Schieberegisters, der sich direkt neben einem Ausgang des Schieberegisters befindet, der gegen einen der Oder-Logikschalter geführt ist. Sofern folglich lediglich der erste oder zweite Eingang des Oder-Logikschalters belegt ist, also sofern lediglich zwei Schaltelemente mittels des Schieberegisters angesteuert werden, entspricht der Endausgang dem dritten Ausgang. Sofern folglich sukzessive die Anzahl der angesteuerten Schaltelemente reduziert wurde, wird der Endausgang des Schieberegisters angesteuert, und das Schieberegister wird folglich erneut in den ursprünglichen Zustand versetzt. Hierbei ist zweckmäßigerweise der Startausgang des Schieberegisters frei, sodass dieser zeitlich nachfolgend zu dem Endausgang angesteuert wird. Somit wird, sofern der Endausgang angesteuert wird, keines der Schaltelemente angesteuert, weswegen keiner der Stränge elektrisch leitend ist. Zweckmäßigerweise ist eine Diode zwischen dem Endausgang und dem Reset-Eingang geschaltet, was eine Beschädigung des Schieberegisters vermeidet. Zusammenfassend ist der Endausgang der letzte belegte Kanal des Schieberegisters.

Alternativ oder besonders bevorzugt in Kombination hierzu ist eine Spannungsversorgungsquelle gegen den Reset-Eingang des Schieberegisters geführt, beispielsweise über einen Kondensator. Die Spannungsversorgungsquelle dient geeigneterweise dem Betrieb des Überspannungsschutzes. Die Spannungsversorgungsquelle selbst ist beispielsweise ein Kondensator, eine Batterie oder ein Transformator. Beispielsweise ist die Spannungsversorgungsquelle mit zumindest einem der Anschlüsse verschaltet, sodass die für den Betrieb des Überspannungsschutzes erforderliche elektrische Energie direkt einem Stromnetz entnommen wird, in das das zu schützende Gerät integriert ist.

Das Schieberegister umfasst einen Zeit-Eingang. Bei Ansteuerung des Zeit-Eingangs des Schieberegisters werden sukzessive die Ausgänge des Schieberegisters durchgesteuert. Hierbei wird jedes Mal dann, wenn an dem Zeit-Eingang ein Signal anliegt, die Ansteuerung der Ausgänge derart verändert, dass diese um einen Ausgang weitergeschaltet werden. Der Zeit-Eingang des Schieberegisters ist gegen einen Ausgang eines weiteren Oder-Logikschalters geführt, insbesondere direkt. Der weitere Oder-Logikschalter weist einen ersten Eingang und einen zweiten Eingang auf. Somit wird, wenn an dem ersten Eingang oder dem zweiten Eingang ein Pegel anliegt, insbesondere die Ansteuerung der Ausgänge des Schieberegisters verändert. Der Pegel bezeichnet insbesondere ein Signal, welches verschieden von null (0) ist.

Der Überspannungsschutz umfasst einen Zeitgeber mit einem Zeit-Ausgang. Der Zeit-Ausgang ist mit dem Zeit-Eingang des Schieberegisters wirkverbunden. Folglich wird mittels des Zeitgebers das Schieberegister angesteuert, wobei mittels des Zeitgebers vorzugsweise ein bestimmtes Taktsignal bereitgestellt wird, welches insbesondere eine konstante Periode aufweist, oder welches vorzugsweise von der aktuell anliegenden Überspannung abhängt. Beispielsweise ist der Zeit-Ausgang direkt mit dem Zeit-Eingang des Schieberegisters verbunden. Der Zeit-Ausgang ist gegen den zweiten Eingang des weiteren Oder-Logikschalters geführt, insbesondere direkt. An dem Zeit-Ausgang des Zeitgebers wird zweckmäßigerweise periodisch ein Ansteuersignal bereitgestellt.

Der erste Eingang jedes Oder-Logikschalters ist gegen den ersten Eingang des weiteren Oder-Logikschalters geführt, insbesondere direkt. Mit anderen Worten ist der erste Eingang des weiteren Oder-Logikschalters mit dem ersten Anschluss wirkverbunden. Somit weist geeigneterweise der Ausgang des weiteren Oder-Logikschalters dann einen Pegel auf, wenn die Überspannung auftritt oder mittels des Zeitgebers ein Signal bereitgestellt ist.

Insbesondere ist der Steuereingang eines der Schaltelemente mit einem Reset-Anschluss des Zeitgebers verbunden. Solange ein Signal an dem Reset-Anschluss des Zeitgebers anliegt, wird dieser insbesondere in einem Grund- oder Startzustand gehalten. Zweckmäßigerweise ist die Verbindung derart, dass ein Reset erfolgt, wenn das Schaltelement geöffnet ist. Somit wird das Schieberegister lediglich dann weitergezählt, wenn das Schaltelement, oder zumindest eines der Schaltelemente, in einem geschlossenen Zustand ist. Geeigneterweise ist die Verschaltung des Überspannungsschutzes derart, dass nach Erfassen der Überspannung sämtliche Schaltelemente in den elektrisch leitenden Zustand versetzt werden, und dass der Zeitgeber aktiviert wird. Hierbei werden mittels des Schieberegisters geeigneterweise die Oder-Logikschalter sukzessive aktiviert, so dass die Schaltelemente in den elektrisch nicht-leitenden Zustand überführt werden. Sobald das letzte elektrisch leitende Schaltelement in den elektrisch nicht-leitenden Zustand überführt wird, wird zweckmäßigerweise der Zeitgeber zurückgesetzt.

Beispielsweise ist der Zeitgeber ein NE555. Geeigneterweise ist "OUT" der Zeit-Ausgang, der beispielsweise gegen den Logikschalter oder direkt gegen den Zeit-Eingang des Schieberegisters direkt oder indirekt über den weiteren Oder-Logikschalter geführt ist. Insbesondere ist "OUT'" mittels einer Diode gegen den "TRIG" (Trigger-Anschluss) geführt, welcher insbesondere mittels eines Widerstandsteilers gegen den ersten Anschluss geführt ist, welcher bei Betrieb vorzugsweise ein elektrisches Potential aufweist, das verschieden von null (0) ist. Beispielsweise ist "GND" (GND-Anschluss) gegen den zweiten Anschluss des Überspannungsschutzes geführt. Beispielsweise ist "RESET" (Reset-Anschluss) mit dem Steuereingang eines der Schaltelemente wirkverbunden, beispielsweise direkt dagegen geführt. Zweckmäßigerweise ist der NE555 als monostabile Kippstufe realisiert.

Zumindest einer der Oder-Logikschalter weist einen dritten Eingang auf, wobei an dem Ausgang des Oder-Logikschalters zweckmäßigerweise genau dann ein Pegel anliegt, wenn an zumindest einem der drei Eingänge ein Pegel anliegt. Insbesondere weisen sämtliche Oder-Logikschalter den dritten Eingang auf. Hierbei ist beispielsweise bei einem der Oder-Logikschalter der dritte Eingang auf Masse gelegt. Der dritte Eingang zumindest eines der Oder-Logikschalter ist gegen einen Ausgang eines der anderen der Oder-Logikschalter geführt, insbesondere direkt. Vorzugsweise ist hierbei der dritte Eingang gegen den Steuereingang eines der Schaltelemente geführt, welcher ebenfalls gegen den Ausgang des anderen der Oder-Logikschalter geführt ist. Geeigneterweise sind mit Ausnahme eines der Oder-Logikschalter sämtliche dritte Eingänge gegen jeweils einen Ausgang eines weiteren der Oder-Logikschalter geführt, und jedem Ausgang der Oder-Logikschalter ist somit einer der dritten Eingänge der Oder-Logikschalter zugeordnet.

Falls mittels des Schieberegisters somit einer der Oder-Logikschalter aktiviert wird, wird dieser Oder-Logikschalter und ein anderer der Oder-Logikschalter über dessen Ausgang aktiviert. Somit sind zumindest zwei der Schaltelemente aktiviert und elektrisch leitend geschaltet, weswegen zumindest zwei der Stränge des Überspannungsschutzes elektrisch leitend sind. Insbesondere ist die Verschaltung derart, dass bei Ansteuerung eines der Oder-Logikschalter sämtliche Schaltelemente in den elektrisch leitenden Zustand versetzt werden. Dieser Oder-Logikschalter ist bevorzugt gegen den ersten Ausgang des Schieberegisters geführt. Somit erfolgt die Ansteuerung sämtlicher Schaltelemente zweckmäßigerweise dann, wenn der erste Ausgang des Schieberegisters angesteuert wird. Sobald der nachfolgende Ausgang des Schieberegisters angesteuert wird, wird vorzugsweise lediglich eines der Schaltelemente in den elektrisch nicht-leitenden Zustand überführt, so dass die Anzahl der elektrisch leitenden Stränge des Überspannungsschutzes um genau eins (1) reduziert ist. Bei erneuter Ansteuerung des Schieberegisters und Ansteuerung eines weiteren der Ausgänge des Schieberegisters wird geeigneterweise aufgrund der Verschaltung der Oder-Logikschalter wiederum zusätzlich lediglich ein einziges der Schaltelemente in den elektrisch nicht-leitenden Zustand versetzt, so dass ein weiterer der Stränge des Überspannungsschutzes elektrisch nicht leitend ist. Infolgedessen ist es ermöglicht, mittels Ansteuerung des Schieberegisters den elektrischen Widerstand des Überspannungsschutzes sukzessive und stufenweise zu erhöhen.

Vorzugsweise ist parallel zu dem Schaltelement eine Reihenschaltung eines weiteren Widerstands und einer Kapazität geschaltet. Sofern der Überspannungsschutz eine Anzahl derartiger Schaltungselemente aufweist, deren Steuereingang jeweils über einen Oder-Logikschalter zu einem Ausgang des etwaigen Schieberegisters geführt ist, ist vorzugsweise die Reihenschaltung parallel zu demjenigen Schaltelement geschaltet, welches gegen den Ausgang des Schieberegisters geführt ist, der benachbart zu dem Endausgang ist. Die Kapazität ist bevorzugt ein Kondensator. Sofern das Schaltelement in dem elektrisch nicht leitenden Zustand ist, ist mittels des Widerstands dieses Strangs sowie des weiteren Widerstands und der Kapazität ein RC-Kreis gebildet, welcher einen etwaigen weiter fließenden elektrischen Strom aufnimmt. Somit ist stets ein elektrischer Stromfluss über den Überspannungsschutz ermöglicht, auch wenn der elektrische Widerstand vergleichsweise groß ist. Zweckmäßigerweise ist der weitere Widerstand vergleichsweise groß, sodass der elektrische Strom gegen null (0) geführt wird. Aufgrund der Stränge des Überspannungsschutzes ist der fließende elektrische Strom vergleichsweise gering, sodass die Kapazität vergleichsweise klein dimensioniert werden kann, was Herstellungskosten reduziert. Geeigneterweise ist zur Kapazität ein zusätzlicher Widerstand parallel geschaltet. Mittels des zusätzlichen Widerstands ist sichergestellt, dass die Kapazität stets entladen wird.

Zweckmäßigerweise basiert der Überspannungsschutz auf Analogtechnik. Mit anderen Worten ist der Überspannungsschutz in Analogtechnik erstellt. Sofern der Überspannungsschutz folglich die Oder-Logikschalter, den Zeitgeber, den weiteren Oder-Logikschalter und/oder das Schieberegister aufweist, basieren diese insbesondere auf Analogtechnik und sind in dieser gefertigt. Auf diese Weise ist eine Robustheit erhöht. Zudem sind Herstellungskosten reduziert.

Die Schaltung weist ein zu schützendes Gerät auf, dem ein Überspannungsschutz parallel geschaltet ist. Das zu schützende Gerät ist zweckmäßigerweise ein Freilandgerät, wie beispielsweise ein Transponder. Insbesondere ist das zu schützende Gerät für eine Funkkommunikation vorgesehen und beispielsweise ein Mobilfunktransponder. Der Überspannungsschutz weist einen ersten Anschluss und einen zweiten Anschluss auf, zwischen denen eine Anzahl an Strängen zueinander parallel geschaltet ist, wobei jeder Strang einen Widerstand aufweist, und wobei zumindest einer der Stränge ein Schaltelement umfasst, das in Reihe zu dem Widerstand des Strangs geschaltet ist. Das zu schützende Gerät ist sowohl mit dem ersten Anschluss als auch mit dem zweiten Anschluss des Überspannungsschutzes elektrisch kontaktiert. Die Schaltung ist beispielsweise innerhalb eines Gehäuses integriert oder weist ein Gehäuse auf, sodass das Gerät und der Überspannungsschutz mittels des gemeinsamen Gehäuses vor mechanischen Einflüssen geschützt werden. Alternativ hierzu umfassen das zu schützende Gerät und der Überspannungsschutz jeweils ein separates Gehäuse, welche beispielsweise zur Montage aneinander befestigt werden.

Ein Überspannungsschutz, der einen ersten Anschluss und einen zweiten Anschluss aufweist, zwischen denen eine Anzahl an Strängen zueinander parallel geschaltet sind, wobei jeder Strang einen Widerstand aufweist, und wobei zumindest einer der Stränge ein Schaltelement umfasst, das in Reihe zu dem Widerstand des Stranges geschaltet ist, wird zur Absicherung eines zu schützenden Geräts gegen eine Überspannung und/oder einen Impulsstrom verwendet. Hierbei tritt insbesondere aufgrund eines Blitzschlages die Überspannung zwischen dem ersten und dem zweiten Anschluss des Überspannungsschutzes auf. Der Blitzschlag erfolgt hierbei beispielsweise in eine direkt mit dem ersten Anschluss bzw. mit dem zweiten Anschluss elektrisch kontaktierten Leitung, oder die Überspannung tritt aufgrund einer Kopplung eines aufgrund des Blitzschlags hervorgerufenen Magnetfelds mit der Leitung auf.

Das Verfahren dient dem Betrieb eines Überspannungsschutzes zur Absicherung eines zu schützenden Geräts, mit einem ersten Anschluss und mit einem zweiten Anschluss, zwischen denen eine Anzahl an Strängen zueinander parallel geschaltet ist. Jeder Strang weist einen Widerstand auf, und zumindest einer der Stränge umfasst ein Schaltelement, das in Reihe zu dem Widerstand des Strangs geschaltet ist. Das Verfahren sieht vor, dass eine Überspannung erfasst wird. Die Überspannung ist eine elektrische Spannung und liegt beispielsweise zwischen dem ersten Anschluss und dem zweiten Anschluss an. Die Überspannung ist hierbei insbesondere derart, dass ein mittels des Überspannungsschutzes zu schützendes Gerät aufgrund der Überspannung beschädigt würde. Die Überspannung tritt beispielweise aufgrund eines Impulsstroms und/oder einer induktiven Wirkung auf. Alternativ oder in Kombination hierzu tritt die Überspannung aufgrund eines Blitzschlages auf. Die Überspannung wird beispielsweise mittels eines externen Geräts, eines Sensors, oder intrinsisch mittels des Überspannungsschutzes selbst erfasst. Die Erfassung der Überspannung erfolgt geeigneterweise qualitativ oder quantitativ. Nach dem Erfassen der Überspannung wird das Schaltelement für eine Zeitspanne geschlossen. Geeigneterweise wird das Schaltelement im Wesentlichen unverzüglich nach Erfassen oder bei Erfassen der Überspannung geschlossen.

Somit kommutiert bei Auftreten der Überspannung der elektrische Strom zumindest teilweise auf den Überspannungsschutz und zwar auf die Stränge. Aufgrund der Parallelschaltung der Widerstände ist der elektrische Widerstand des Überspannungsschutzes verringert. Nach Ablauf der Zeitspanne, die insbesondere in Abhängigkeit der aktuell anliegenden Überspannung festgelegt ist, wird das Schaltelement geöffnet, was zu einer Erhöhung des elektrischen Widerstands des Überspannungsschutzes führt. Sofern der Überspannungsschutz eine Anzahl an Strängen mit Schaltelementen aufweist, sieht das Verfahren vor, dass diese sukzessive geöffnet werden, wobei sämtliche Schaltelemente zweckmäßigerweise beim Erfassen der Überspannung zunächst geschlossen werden. Geeigneterweise ist zwischen Betätigung der einzelnen Schaltelemente jeweils eine oder die Zeitspanne vorhanden, sodass der elektrische Widerstand des Überspannungsschutzes sukzessive erhöht wird.

Wenn mittels des Überspannungsschutzes ein Gerät vor einem Impulsstrom und/oder einer Überspannung wird, das parallel zu dem Überspannungsschutz geschaltet ist, ist die über das Gerät anfallende elektrische Spannung begrenzt. Nach Ablauf der Zeitspanne ist der fließende elektrische Strom aufgrund des elektrischen Widerstands des Überspannungsschutzes reduziert. Wenn nun das Schaltelement betätigt wird, steigt der elektrische Widerstand und folglich die elektrische Spannung erneut an. Dies führt zu einer weiteren und ausgeprägten Verringerung des elektrischen Stromflusses. Somit wird mittels Erhöhung des elektrischen Widerstands der elektrische Stromfluss sukzessive unterbunden, wobei die maximal anliegende elektrische Spannung reduziert ist. Sofern dem Schaltelement die Kapazität und der weitere Widerstand parallel geschaltet ist, wird mittels dieser Reihenschaltung nach Betätigung des Schaltelements ein etwaiger verbleibender elektrischer Stromfluss aufgenommen und gegen null gebracht.

Sofern einzelne Bauteile als erstes, zweites, drittes... Bauteil bezeichnet werden, dient dies insbesondere lediglich der Bezeichnung des jeweiligen Bauteils. Insbesondere impliziert dies nicht das Vorhandensein einer bestimmten Anzahl von Bauteilen. Die im Zusammenhang mit dem Überspannungsschutz und/oder der Schaltung genannten Vorteile und Weiterbildungen sind sinngemäß auch auf die Verwendung und das Verfahren zu übertragen und umgekehrt.

Nachfolgend wird ein Ausführungsbeispiel der Erfindung anhand einer Zeichnung näher erläutert. Darin zeigen:
- Fig. 1: schematisch vereinfacht eine Schaltung mit einem zu schützenden Gerät und einem Überspannungsschutz,
- Fig. 2: einen Schaltplan des Überspannungsschutzes, und
- Fig. 3: ein Verfahren zum Betrieb des Überspannungsschutzes.

Einander entsprechende Teile sind in sämtlichen Figuren mit den gleichen Bezugszeichen versehen.

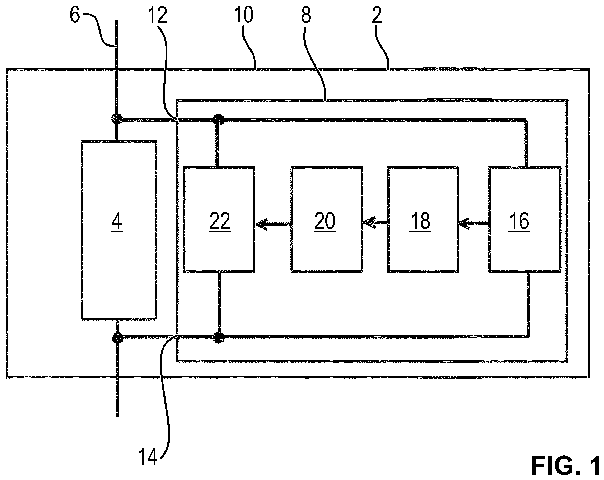

In Fig. 1 ist schematisch vereinfacht eine Schaltung 2 mit einem zu schützenden Gerät 4 dargestellt, welches in eine elektrische Leitung 6 eingebracht ist. Die elektrische Leitung 6 ist elektrisch mit dem zu schützenden Gerät 4 kontaktiert, das ein Mobilfunktransponder ist. Ferner umfasst die Schaltung 2 einen Überspannungsschutz 8, der parallel zu dem zu schützenden Gerät 4 geschaltet ist. Das zu schützende Gerät 4 sowie der Überspannungsschutz 8 sind innerhalb eines Gehäuses 10 angeordnet.

Der Überspannungsschutz 8 weist einen ersten Anschluss 12 sowie einen zweiten Anschluss 14 auf, die elektrisch direkt mit der elektrischen Leitung 6 kontaktiert sind, wobei sich das zu schützende Gerät 4 zwischen den beiden Anschlüssen 12, 14 befindet. Zudem weist der Überspannungsschutz 8 eine Erfassungsschaltung 16 auf, mittels derer eine Überspannung erfasst werden kann, welche zwischen den beiden Anschlüssen 12, 14 anliegt, beispielsweise aufgrund eines Blitzeinschlag. Zudem umfasst der Überspannungsschutz 8 einen Zeitgeber 18 sowie ein Schieberegister 20. Der Zeitgeber 18 ist ein NE555-Baustein. Zudem weist der Überspannungsschutz 8 eine Anzahl an Strängen 22 auf, die zueinander parallel geschaltet und jeweils mit dem ersten Anschluss 12 und dem zweiten Anschluss 14 elektrisch kontaktiert sind. Somit sind die Stränge 22 parallel zu dem zu schützenden Gerät 4 geschaltet.

Mittels der Erfassungsschaltung 16 wird die zwischen dem ersten Anschluss 12 und dem zweiten Anschluss 14 anliegende Überspannung erfasst, sofern diese auftritt. Infolgedessen wird der Zeitgeber 18 angesteuert, der ein NE555-Baustein ist. Mittels dessen wird das Schieberegister 20 angesteuert und somit mittels des Zeitgebers 18 mit bestimmten Takten versorgt. Mittels des Schieberegisters 20 werden die Stränge 22 gesteuert. Der Überspannungsschutz 8 basiert auf Analogtechnik. Mit anderen Worten sind die Stränge 22 sowie der Zeitgeber 18 als auch das Schieberegister 20 und die Erfassungsschaltung 16 als Analog-Bauteile ausgeführt und bestehen somit aus analogen Bauteilen.

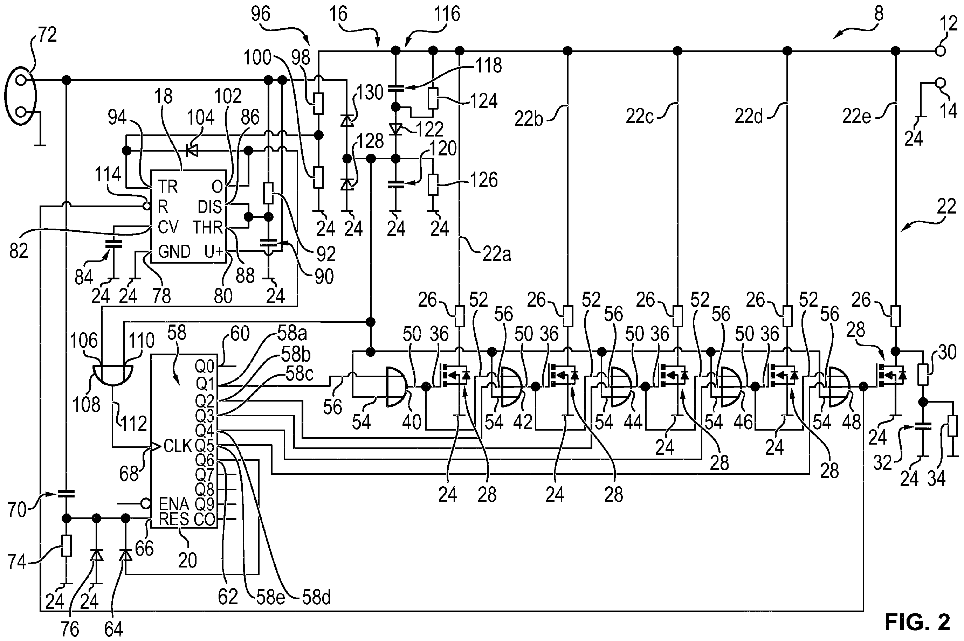

In Fig. 2 ist ein vergleichsweise detaillierter Schaltplan des Überspannungsschutzes 8 mit den Strängen 22 dargestellt. Der Überspannungsschutz 8 weist einen ersten Strang 22a, einen zweiten Strang 22b, einen dritten Strang 22c, einen vierten Strang 22d sowie einen fünften Strang 22e auf, die zueinander parallel geschaltet und gegen den ersten Anschluss 12 sowie gegen Masse 24 geführt sind, gegen die auch der zweite Anschluss 14 geführt ist. Somit sind die Stränge 22 zwischen dem ersten Anschluss 12 und dem zweiten Anschluss 16 zueinander parallel geschaltet. Die Stränge 22 sind baugleich und weisen jeweils einen Widerstand 26 sowie ein Schaltelement 28 in Form eines IGBTs auf. Zusammenfassend weist jeder der Stränge 22 jeweils eines der Schaltelemente 28 auf. Der Widerstand 26 und das Schaltelement 28 jedes Strangs 22 sind zueinander in Reihe geschaltet. Der ohmsche Widerstand der einzelnen Stränge 22a, 22b, 22c, 22d, 22e ist zumindest teilweise um jeweils ein ganzzahliges Vielfaches erhöht. Der ohmsche Widerstand des Widerstands 26 des ersten Strangs 22a beträgt 20 Ohm, der ohmsche Widerstand des Widerstands 26 des zweiten Strangs 22b beträgt 40 Ohm, der ohmsche Widerstand des Widerstands 26 des dritten Strangs 22c beträgt 80 Ohm, und der ohmsche Widerstand des Widerstands 26 des vierten und des fünften Strangs 22d, 22e beträgt jeweils 160 Ohm.

Parallel zu dem Schaltelement 28 des fünften Strangs 22e ist eine Reihenschaltung eines weiteren Widerstandes 30 und einer Kapazität 32 in Form eines Kondensators geschaltet. Hierbei ist der Kondensator 32 gegen das Potential des zweiten Anschluss 14 geführt, also Masse 24. Die Kapazität 32 selbst ist mittels eines zusätzlichen Widerstands 34 überbrückt, der folglich parallel zu der Kapazität 32 geschaltet ist. Der ohmsche Widerstand des weiteren Widerstands 30 ist gleich dem ohmsche Widerstand des Widerstands 26 des fünften Strangs 22e und beträgt 160 Ohm. Der ohmsche Widerstand des zusätzlichen Widerstands 34 beträgt beispielsweise 1 MOhm.

Jedes Schaltelement 28 weist einen Steuereingang 36 auf, mittels dessen der Schaltzustand des jeweiligen Schaltelements 28 eingestellt werden kann. Sofern das Schaltelement 28 mittels des Steuereingangs 36 derart eingestellt ist, dass dieses in einem elektrisch nicht leitenden Zustand ist, ist ein Stromfluss über eben diesen Strang 22 unterbunden. Der Überspannungsschutz 8 weist einen ersten Oder-Logikschalter 40, einen zweiten Oder-Logikschalter 42, einen dritten Oder-Logikschalter 44, einen vierten Oder-Logikschalter 46 sowie einen fünften Oder-Logikschalter 48 auf, die jeweils Oder-Gatter sind. Der Steuereingang 36 des Schaltelements 28 des ersten Strangs 22a ist gegen einen Ausgang 50 des ersten Oder-Logikschalters 40 geführt. Der Steuereingang 36 des Schaltelements 28 des zweiten Strangs 22b ist gegen den Ausgang 50 des zweiten Oder-Logikschalters 42 geführt. Der Steuereingang 36 des Schaltelements 28 des dritten Strangs 22c ist gegen den Ausgang 50 des dritten Oder-Logikschalters 44 geführt. Der Steuereingang 36 des Schaltelements 28 des vierten Strangs 22d ist gegen den Ausgang 50 des vierten Oder-Logikschalters 46 geführt. Der Steuereingang 36 des Schaltelements 28 des fünften Strang 22e ist gegen den Ausgang 50 des fünften Oder-Logikschalters 48 geführt.

Der Ausgang 50 des ersten Oder-Logikschalters 40 ist gegen einen dritten Eingang 52 des zweiten Oder-Logikschalters 42 geführt. Der Ausgang 50 des zweiten Oder-Logikschalters 42 ist gegen den dritten Eingang 52 des dritten Oder-Logikschalters 44 geführt, dessen Ausgang 50 gegen den dritten Eingang 52 des vierten Oder-Logikschalters 46 geführt ist. Der Ausgang 50 des vierten Oder-Logikschalters 46 ist gegen den dritten Eingang 52 des fünften Oder-Logikschalters 48 geführt. Somit sind auch die dritten Eingänge 52 der Oder-Logikschalter 42, 44, 46, 48 mit jeweils einem Steuereingang 36 eines der Schaltelemente 28 kontaktiert. Jeder der Oder-Logikschalter 40, 42, 44, 46, 48 weist ferner einen ersten Eingang 54 auf, welcher über die als Ansteuerschaltung fungierende Erfassungsschaltung 16 mit dem ersten Anschluss 12 verbunden ist. Auch weist jeder der Oder-Logikschalter 40, 42, 44, 46, 48 jeweils einen zweiten Eingang 56 auf, der jeweils gegen einen Ausgang 58 des Schieberegisters 20 geführt ist. So ist der zweite Eingang 56 des ersten Oder-Logikschalters 40 gegen einen ersten Ausgang 58a des Schieberegisters 20, der zweite Eingang 52 des zweiten Oder-Logikschalters 42 gegen einen zweiten Ausgang 58b des Schieberegisters 20, der zweite Eingang 52 des dritten Oder-Logikschalters 44 gegen einen dritten Ausgang 58c des Schieberegisters 20, der zweite Eingang 52 des vierten Oder-Logikschalters 46 gegen einen vierten Ausgang 58d des Schieberegisters 20 und der zweite Eingang 52 des fünften Oder-Logikschalters 48 gegen einen fünften Ausgang 58e des Schieberegisters 20 geführt.

Die Oder-Logikschalter 40, 42, 44, 46 und 48 sind baugleich, wobei der dritte Eingang 52 des ersten Oder-Logikschalters 40 nicht dargestellt und gegen Masse 24 geführt ist. An dem jeweiligen Ausgang 50 der Oder-Logikschalter 40, 42, 44, 46, 48 liegt dann ein Pegel an, wenn an zumindest einem der Eingänge 52, 54, 56 ein Pegel anliegt.

Zudem weist das Schieberegister 20 einen Startausgang 60 sowie einen Endausgang 62 auf. Der Startausgang 60 des Schieberegisters 20 ist frei und folglich mit keinem weiteren elektrischen oder elektronischen Bauteil elektrisch kontaktiert. Ein Endausgang 62 des Schieberegisters 20 ist über eine erste Diode 64 gegen einen Reset-Eingang 66 des Schieberegisters 20 geführt. Hierbei ist mittels der Diode 64 lediglich ein Stromfluss von dem Endausgang 62 zu dem Reset-Eingang 66 ermöglicht. Sofern das Schieberegister 20 aktiviert ist, wird zunächst der Startausgang 60 angesteuert. Im Anschluss hieran wird der erste Ausgang 58a, der zweite Ausgang 58b, der dritte Ausgang 58c, der vierte Ausgang 58d, der fünfte Ausgang 58e und im Anschluss hieran der Endausgang 62 angesteuert, wobei die Ansteuerung in Abhängigkeit eines an einem Zeit-Eingang 68 des Schieberegisters 20 anliegenden Ansteuersignals erfolgt. Der Startausgang 60 entspricht somit dem Kanal Q0, der erste Ausgang 58a dem Kanal Q1, der zweite Ausgang 58b dem Kanal Q2 ... bis zu dem End-Ausgang 62, der dem Kanal Q6 entspricht.

Der Reset-Eingang 66 des Schieberegisters 20 ist über einen zweiten Kondensator 70 gegen eine Spannungsversorgungsquelle 72 geführt, mittels derer eine Gleichspannung von 15 Volt bereitgestellt ist. Auch ist der Reset-Eingang 66 über einen zweiten Widerstand 74 gegen Masse 24 geführt. Dem zweiten Widerstand 74 ist parallel eine zweite Diode 76 geschaltet, mittels derer ein Stromfluss von Masse 24 zu dem Reset-Eingang 66 ermöglicht ist.

Der Zeitgeber 18 ist als monostabile Kippstufe verschaltet. So sind ein GND-Anschluss 78 des Zeitgebers 18 gegen Masse 24 und ein Versorgungsspannungsanschluss 80 des Zeitgebers 18 gegen die Spannungsversorgungsquelle 72 geführt. Ein Control-Anschluss 82 des Zeitgebers 18 ist über einen dritten Kondensator 84 gegen Masse 24 geführt. Ein Discharge-Anschluss 86 des Zeitgebers 18 ist gegen eine Threshold-Anschluss 88 des Zeitgebers 18 sowie über einen vierten Kondensator 90 gegen Masse 24 geführt. Auch sind der Discharge-Anschluss 86 und der Threshold-Anschluss 88 mittels eines dritten Widerstands 92 gegen die Spannungsversorgungsquelle 72 geführt. Ein Trigger-Anschluss 94 des Zeitgebers 18 ist mittels eines Spannungsteilers 96 der Erfassungsschaltung 16 mit dem ersten Anschluss 12 und dem elektrischen Potential des zweiten Anschlusses 16 elektrisch kontaktiert. Hierfür ist der Trigger-Anschluss 94 mittels eines vierten Widerstands 98 gegen den ersten Anschluss 12 und mittels eines fünften Widerstands 100 gegen Masse 24 geführt.

Ein Zeit-Ausgang 102 des Zeitgebers 40 ist mittels einer dritten Diode 104 zu dem Trigger-Anschluss 94 geführt, wobei ein Stromfluss von dem Zeit-Ausgang 102 zu dem Trigger-Anschluss 94 ermöglicht ist. Der Zeit-Ausgang 102 ist ferner gegen einen zweiten Eingang 106 eines weiteren Oder-Logikschalters 108 geführt, der baugleich zu dem ersten Oder-Logikschalter 40 ist. Ein erster Eingang 110 des weiteren Oder-Logikschalters 108 ist gegen den ersten Eingang 54 des ersten Oder-Logikschalters 40, den ersten Eingang 54 des zweiten Oder-Logikschalters 42, den ersten Eingang 54 des dritten Oder-Logikschalters 44, den ersten Eingang 54 des vierten Oder-Logikschalters 46 sowie den ersten Eingang 54 des fünften Oder-Logikschalters 48 geführt. Ein Ausgang 112 des weiteren Oder-Logikschalters 108 ist gegen den Zeit-Eingang 68 des Schieberegisters 20 geführt ist. Ferner weist der Zeitgeber 18 einen Reset-Eingang 114 auf, der mit dem Steuereingang 36 des Schaltelements 28 des fünften Strangs 22e derart verschaltet ist, dass der Zeitgeber 18 zurückgesetzt wird, falls das Schaltelement 28 des fünften Strangs 22e sich in dem elektrisch nicht-leitenden Zustand befindet.

Die Erfassungsschaltung 16 weist einen kapazitiven Spannungsteiler 116 mit einem fünften Kondensator 118 und einem sechsten Kondensator 120 auf, die in Reihe zwischen dem ersten Anschluss 12 und Masse 24 geschaltet sind. Zwischen dem fünften Kondensator 118 und dem sechsten Kondensator 120 ist in Reihenschaltung eine vierte Diode 122 angeordnet, und der fünfte Kondensator 118 ist mittels eines sechsten Widerstands 124 und der sechste Kondensator 120 mittels eines siebten Widerstands 126 überbrückt. Ferner ist der sechste Kondensator 120 mittels einer fünften Diode 128 überbrückt und mittels einer sechsten Diode 130 gegen die Spannungsversorgungsquelle 72 geführt. Zwischen der vierten Diode 122 und dem sechsten Kondensator 120 befindet sich ein Abgriff, welcher mittels der ersten Eingänge 54 des ersten, zweiten, dritten, vierten, fünften, Oder-Logikschalters 40, 42, 44, 46, 48 sowie dem zweiten Eingang 110 des weiteren Logikschalters 108 kontaktiert ist.

Falls die Überspannung an den beiden Anschlüssen 12, 14 anliegt, übersteigt die über den sechsten Kondensator 120 abfallende elektrische Spannung einen bestimmten Grenzwert, sodass der erste, zweite, dritte, vierte und fünfte Oder-Logikschalter 40, 42, 44, 46, 48 angesteuert werden, weswegen die Schaltelemente 28 in den elektrisch leitenden Zustand überführt werden. Hierbei wird die maximal an den Oder-Logikschaltern 40, 42, 44, 46, 48, 108 anliegende elektrische Spannung mittels der fünften sowie sechsten Diode 128, 130 eingestellt. Mittels des sechsten Widerstands 124 sowie des siebten Widerstands 126 werden der fünfte bzw. sechste Kondensator 118, 120 entladen. Die vierte Diode 122 stellt sicher, dass der fünfte Kondensator 118 lediglich über den sechsten Widerstand 126 entladen werden kann.

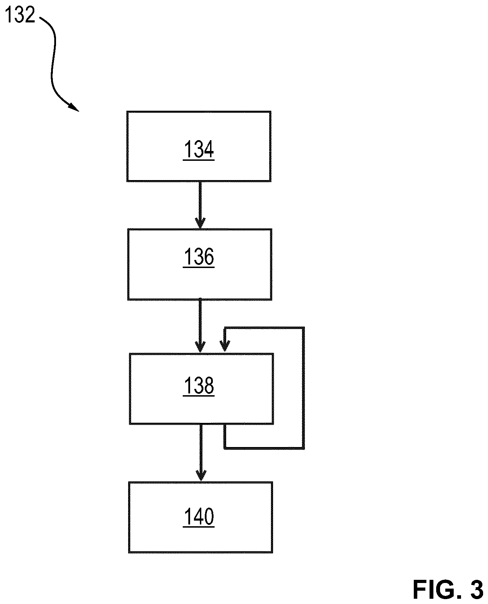

In Fig. 3 ist ein Verfahren 132 zum Betrieb des Überspannungsschutzes 8 dargestellt. In einem ersten Arbeitsschritt 134 wird die Überspannung erfasst. Dies erfolgt mittels der Erfassungsschaltung 16, und zwar dann, wenn die über den sechsten Kondensator 120 anfallende elektrische Spannung den bestimmten Grenzwert überschreitet. In einem zweiten Arbeitsschritt 136 werden sämtliche Schaltelemente 28 geschlossen, so dass der die elektrische Spannung zwischen dem ersten Anschluss 12 und Masse 24, auf dem der zweite Anschluss 14 ist, verringert wird. Mit anderen Worten ist ein Stromfluss über die Stränge 22 möglich. Das Schließen der Schaltelemente 28 erfolgt mittels des ersten, zweiten, dritten, vierten und fünften Oder-Logikschalters 40, 42, 44, 46, 48, sobald über den sechsten Kondensator 120 die bestimmte Spannung anliegt. Ferner ist die über den Spannungsteiler 96 anfallende elektrische Spannung aufgrund der Überspannung erhöht, und dieses elektrische Spannung ist auf den Trigger-Anschluss 94 des Zeitgebers 18 gegeben. Auch wird über den weiteren Oder-Logikschalter 108 ein Signal auf das Schiebregister 20 gegeben, so dass nunmehr nicht mehr der Startausgang 60 sondern der erste Ausgang 58a angesteuert wird. Infolgedessen bleiben die Schaltelemente 28 aufgrund der Ansteuerung des ersten Oder-Logikschalters 40 sowie die Verbindung der dritten Eingänge 52 mit den Ausgängen 50 des jeweils vorhergehenden Oder-Logikschalters 40, 42, 44, 46, 48 im geschlossenen Zustand, auch wenn die elektrische Spannung, die über den sechsten Kondensator 120 abfällt unter den bestimmten Grenzwert fällt.

Sobald die an dem Trigger-Anschluss 94 des Zeitgebers 18 anliegende elektrische Spannung auf ein Drittel der Betriebsspannung gefallen ist, wird in einem dritten Arbeitsschritt 138 über den Zeit-Ausgang 102 ein Puls ausgegeben und an den weiteren Oder-Logikschalter 68 geleitet. Infolgedessen wird nunmehr der zweite Ausgang 58b des Schieberegisters 20 angesteuert und das Schaltelement 28 des ersten Strangs 22a geöffnet. Somit sind lediglich nur noch vier der Stränge 22 elektrisch leitend und der Widerstand des Überspannungsschutzes 8 ist erhöht. Der Zeitraum zwischen Beginn des zweiten Arbeitsschritts 136 und Beginn des dritten Arbeitsschritts 138 definiert insbesondere eine bestimmte Zeitspanne.

Der dritte Arbeitsschritt 138 wird so lange wiederholt, bis der fünfte Ausgang 58e angesteuert wird. Im Anschluss hieran wird ein vierter Arbeitsschritt 140 ausgeführt und der Endausgang 62 des Schieberegisters 20 angesteuert. Infolgedessen wird der Reset-Eingang 66 des Schieberegisters 20 angesteuert und erneut der Startausgang 60 angesteuert. Auch wird das Schaltelement 28 des fünften Strangs 22e in den geöffneten Zustand versetzt, so dass der Zeitgeber 18 über den Reset-Eingang 114 ebenfalls in den ursprünglichen Zustand versetzt wird. Die verbleibende zwischen dem ersten Anschluss 12 und dem zweiten Anschluss 14 anliegende elektrische Spannung wird über den weiteren Widerstand 30 sowie die Kapazität 32 als auch den Widerstand 26 des fünften Strangs 22e abgebaut. Mittels des zusätzlichen Widerstands 34 ist sichergestellt, dass die Kapazität 32 im Anschluss hieran entladen wird.

Zusammenfassend ist mittels des Überspannungsschutzes 8 sichergestellt, dass vergleichsweise häufig auftretende Überspannungen verschleißfrei und zuverlässig abgefangen werden, wobei die maximale Betriebsdauer des Überspannungsschutzes 8 vergleichsweise hoch ist. Falls an dem zu schützenden Gerät 4 eine elektrische Überspannung auftritt, werden die Stränge 22 aktiviert und somit elektrisch leitend geschaltet. Infolgedessen wird die an dem zu schützenden Gerät 4 anliegende Überspannung aufgrund der parallelen Stränge 22 begrenzt. Zusätzlich wird der Zeitgeber 18 und das Schieberegister 20 aktiviert. Die maximale Überspannung ist von dem fließenden elektrischen Strom sowie dem ohmschen Widerstand der Stränge 22 abhängig. Somit kann ein Stoßstrom sicher abgeleitet werden, ohne dass das zu schützende Gerät 4 beschädigt wird. Wenn der elektrische Strom absinkt, wird dies mittels der Erfassungsschaltung 16 sowie des Zeitgebers 18 erfasst und ein Signal an das Schieberegister 20 geleitet. Infolgedessen wird der Widerstandswert des Überspannungsschutzes 8 erhöht, wodurch es zu einem erneuten Anstieg der elektrischen Spannung zwischen dem ersten Anschluss 12 und dem zweiten Anschluss 14 kommt. Im Anschluss hieran sinkt der elektrische Strom erneut ab. Dieser Vorgang wird so lange wiederholt, bis der Strom aufgrund der Reihenschaltung aus dem elektrischen Widerstand 26, dem weiteren Widerstand 30 und der Kapazität 32 zu Null gezwungen wird. Da die elektrische Energie im Wesentlichen aufgrund der Widerstände 26 sowie des weiteren Widerstands 30 aufgenommen wird, ist eine vergleichsweise klein dimensionierte Kapazität 32 ausreichend.

Aufgrund der Verschaltung der Erfassungsschaltung 16 mit dem ersten, zweiten, dritten, vierten und fünften Oder-Logikschalter 40, 42, 44, 46, 48 ist ein vergleichsweise schnelles Einschalten der Schaltelemente 28 ermöglicht, so dass auch transiente Überspannungen vergleichsweise sicher abgefangen werden. Aufgrund der Verschaltung des Reset-Eingangs 114 des Zeitgebers 18 mit dem Schaltelement 28 des fünften Strangs 22e ist sichergestellt, dass der Zeitgeber 18 nur dann aktiv ist, wenn die Überspannung vorhanden ist. Hierbei wird über den Spannungsteiler 96 die elektrische Spannung auf den Trigger-Ausgang 94 des Zeitgebers 18 gegeben. Sobald die elektrische Spannung an dem Trigger-Ausgang 94 auf ein Drittel der Betriebsspannung gefallen ist, gibt der Zeitgeber 18 einen Impuls auf den Zeit-Ausgang 102 und somit an das Schieberegister 20. Um auch bei einer schwach induktiven Last ein sicheres Durchlaufen des Schieberegisters 20 zu gewährleisten, ist eine Zwangsimpulsschaltung implementiert. Die Mindestimpulsbreite wird mittels des dritten Widerstands 92 und mittels des vierten Kondensators 90 vorgegeben. Der Discharge-Anschluss 86 des Zeitgebers 18 ist ein Kollektor eines Transistors, der intern mit dem Zeit-Ausgang 102 verbunden ist. Dieser sperrt somit, wenn der Ausgang high ist und somit einen Pegel aufweist, und leitet, wenn der Ausgang low ist, weswegen der vierte Kondensator 90 über den dritten Widerstand 92 geladen wird, wenn der Zeit-Ausgang 102 high ist. Dies erfolgt so lange, solange die elektrische Spannung am Threshold-Ausgang 88 unterhalb 2/3 der elektrischen Betriebsspannung liegt. Da ein neues Intervall erst beginnen kann, wenn die elektrische Spannung am Trigger- Ausgang 94 unter 1/3 der Betriebsspannung gesunken ist, ist der Zeit-Ausgang (Ausgang) 102 über die dritte Diode 104 auf den Trigger- Ausgang 94 zurückgekoppelt.

Die Erfassungsschaltung 16 umfasst den fünften Kondensator 118, den sechsten Kondensator 120, die vierte Diode 122 sowie den sechsten und siebten Widerstand 124, 126. Hierbei bilden der fünfte und sechste Kondensator 118, 120 den kapazitiven Spannungsteiler 116. Die elektrische Spannung über den sechsten Kondensator 120 wird direkt an den weiteren Oder-Logikschalter 108 sowie den ersten, zweiten, dritten, vierten und fünften Oder-Logikschalter 40, 42, 44, 46, 48 weitergeleitet. Sobald diese elektrische Spannung einen bestimmten Auslösewert überschreitet, werden sämtliche Stränge 22 in den elektrisch leitenden Zustand versetzt. Um eine Beschädigung der Oder-Logikschalter 40, 42, 44, 46, 48, 108 zu vermeiden, wird die maximale elektrische Spannung mittels der fünften und sechsten Diode 128, 130 begrenzt. Mittels des sechsten und siebten Widerstands 124, 126 ist sichergestellt, dass der fünften und sechste Kondensator 118, 120 sicher entladen werden. Hierbei wird mittels der vierten Diode 122 sichergestellt, dass sich der sechste Kondensator 120 nicht über den fünften Kondensator 118 entladen kann. Dies kann lediglich mittels des siebten Widerstands 126 erfolgen, weswegen eine verlängerte Einschaltdauer der Stränge 22 realisiert wird. Infolgedessen ist sichergestellt, dass auch bei vergleichsweise kurzen anliegenden Überspannungen der Überspannungsschutz 8 bestimmungsgemäß arbeitet und insbesondere das Verfahren 132 ausgeführt wird, auch falls der Zeitgeber 18, das Schieberegister 20 und/oder die Oder-Logikschalter 40, 42, 44, 46, 48, 108 eine bestimmte Verzögerungszeit aufweisen.

### Bezugszeichenliste

- 2: Schaltung
- 4: zu schützendes Gerät
- 6: elektrische Leitung
- 8: Überspannungsschutz
- 10: Gehäuse
- 12: erster Anschluss
- 14: zweiter Anschluss
- 16: Erfassungsschaltung
- 18: Zeitgeber
- 20: Schieberegister
- 22: Strang
- 22a: erster Strang
- 22b: zweiter Strang
- 22c: dritter Strang
- 22d: vierter Strang
- 22e: fünfter Strang
- 24: Masse
- 26: Widerstand
- 28: Schaltelement
- 30: weiterer Widerstand
- 32: Kapazität
- 34: zusätzlicher Widerstand
- 36: Steuereingang
- 40: erster Oder-Logikschalter
- 42: zweiter Oder-Logikschalter
- 44: dritter Oder-Logikschalter
- 46: vierter Oder-Logikschalter
- 48: fünfter Oder-Logikschalter
- 50: Ausgang des Oder-Logikschalters
- 52: dritter Eingang des Oder-Logikschalters
- 54: erster Eingang des Oder-Logikschalters
- 56: zweiter Eingang des Oder-Logikschalters
- 58: Ausgang des Schieberegisters
- 58a: erster Ausgang des Schieberegisters
- 58b: zweiter Ausgang des Schieberegisters
- 58c: dritter Ausgang des Schieberegisters
- 58d: vierter Ausgang des Schieberegisters
- 58e: fünfter Ausgang des Schieberegisters
- 60: Startausgang
- 62: Endausgang
- 64: erste Diode
- 66: Reset-Eingang des Schieberegisters
- 68: Zeit-Eingang des Schieberegisters
- 70: zweiter Kondensator
- 72: Spannungsversorgungsquelle
- 74: zweiter Widerstand
- 76: zweite Diode
- 78: GND-Anschluss
- 80: Versorgungsspannungsanschluss
- 82: Control-Anschluss
- 84: dritter Kondensator
- 86: Discharge-Anschluss
- 88: Threshold-Anschluss
- 90: vierter Kondensator
- 92: dritter Widerstand
- 94: Trigger-Anschluss
- 96: Spannungsteiler
- 98: vierter Widerstand
- 100: fünfter Widerstand
- 102: Zeit-Ausgang
- 104: dritte Diode
- 106: zweiter Eingang des weiteren Oder-Logikschalters
- 108: weiterer Oder-Logikschalter
- 110: erster Eingang des weiteren Oder-Logikschalters
- 112: Ausgang des weiteren Oder-Logikschalters
- 114: Reset-Eingang
- 116: kapazitiver Spannungsteiler
- 118: fünfter Kondensator
- 120: sechster Kondensator
- 122: vierte Diode
- 124: sechster Widerstand
- 126: siebter Widerstand
- 128: fünfte Diode
- 130: sechste Diode
- 132: Verfahren
- 134: erster Arbeitsschritt
- 136: zweiter Arbeitsschritt
- 138: dritter Arbeitsschritt
- 140: vierter Arbeitsschritt

## Patentansprüche

1. Überspannungsschutz (8) zur Absicherung eines zu schützenden Geräts (4), mit einem ersten Anschluss (12), und mit einem zweiten Anschluss (14), zwischen denen eine Anzahl an Strängen (22) zueinander parallel geschaltet ist,
- wobei jeder Strang (22) einen Widerstand (26) aufweist,
- wobei jeder der Stränge (22) ein Schaltelement (28) umfasst, das in Reihe zu dem Widerstand (26) des Strangs (22) geschaltet ist,
- wobei jedes Schaltelement (28) einen Steuereingang (36) aufweist, **dadurch gekennzeichnet,**
- **dass** der Steuereingang (36) jedes der Schaltelemente (28) gegen einen Ausgang (50) jeweils eines Oder-Logikschalters (40, 42, 44, 46, 48) geführt ist,
- **dass** ein erster Eingang (54) jedes Oder-Logikschalters (40, 42, 44, 46, 48) mit dem ersten Anschluss (12) verbunden ist,
- **dass** der erste Eingang (54) jedes Oder-Logikschalters (40, 42, 44, 46, 48) gegen einen ersten Eingang (110) eines weiteren Oder-Logikschalters (108) und ein Zeit-Ausgang (102) eines Zeitgebers (18) gegen einen zweiten Eingang (106) des weiteren Oder-Logikschalters (108) geführt sind, und dass ein Ausgang (112) des weiteren Oder-Logikschalters (108) gegen einen Zeit-Eingang (68) eines Schieberegisters (20) geführt ist, und
- **dass** ein zweiter Eingang (56) jedes Oder-Logikschalters (40, 42, 44, 46, 48) gegen jeweils einen Ausgang (58) des Schieberegisters (20) geführt ist.

2. Überspannungsschutz (8) nach Anspruch 1,
**dadurch gekennzeichnet,**
**dass** die Stränge (22) schaltungsgleich sind.

3. Überspannungsschutz (8) nach Anspruch 1 oder 2,
**dadurch gekennzeichnet,**
**dass** der erste Eingang (54) dann einen Pegel aufweist, wenn zwischen dem ersten Anschluss (12) und dem zweiten Anschluss (14) eine Überspannung anliegt.

4. Überspannungsschutz (8) nach einem der Ansprüche 1 bis 3,
**dadurch gekennzeichnet,**
**dass** ein Startausgang (60) des Schieberegisters (20) frei ist.

5. Überspannungsschutz (8) nach einem der Ansprüche 1 bis 4,
**dadurch gekennzeichnet,**
**dass** ein Reset-Eingang (66) des Schieberegisters (20) gegen einen Endausgang (62) des Schieberegisters (20) und/oder eine Spannungsversorgungsquelle (72) geführt ist.

6. Überspannungsschutz (8) nach einem der Ansprüche 1 bis 5,
**dadurch gekennzeichnet,**
**dass** ein dritter Eingang (52) zumindest eines der Oder-Logikschalter (40, 42, 44, 46, 48) gegen einen Ausgang (50) eines anderen der Oder-Logikschalter (40, 42, 44, 46, 48) geführt ist.

7. Schaltung (2) mit einem zu schützenden Gerät (4), insbesondere Mobilfunktransponder, und mit einem Überspannungsschutz (8) nach einem der Ansprüche 1 bis 6, der dem zu schützenden Gerät (4) parallel geschaltet ist.

8. Verwendung eines Überspannungsschutzes (8) nach einem der Ansprüche 1 bis 6 zur Absicherung eines zu schützenden Geräts (4) gegen eine Überspannung und/oder einen Impulsstrom.

9. Verfahren (132) zum Betrieb eines Überspannungsschutzes (8) nach einem der Ansprüche 1 bis 6, bei dem
- eine Überspannung erfasst wird, und
- das Schaltelement (28) für eine Zeitspanne geschlossen wird.

## Claims

1. Overvoltage protector (8) for protecting a device (4) to be protected, the overvoltage protector comprising a first terminal (12), and comprising a second terminal (14), between which a number of strings (22) are connected in parallel with one another,
- each string (22) having a resistor (26),
- each of the strings (22) comprising a switching element (28), which is connected in series with the resistor (26) of the string (22),
- each switching element (28) having a control input (36),
**characterized**
- **in that** the control input (36) of each of the switching elements (28) is led to an output (50) respectively of an OR logic switch (40, 42, 44, 46, 48),
- **in that** a first input (54) of each OR logic switch (40, 42, 44, 46, 48) is connected to the first terminal (12),
- **in that** the first input (54) of each OR logic switch (40, 42, 44, 46, 48) is led to a first input (110) of a further OR logic switch (108) and a time output (102) of a timer (18) is led to a second input (106) of the further OR logic switch (108), and in that an output (112) of the further OR logic switch (108) is led to a time input (68) of a shift register (20), and
- **in that** a second input (56) of each OR logic switch (40, 42, 44, 46, 48) is respectively led to an output (58) of the shift register (20).

2. Overvoltage protector (8) according to Claim 1, **characterized**
**in that** the strings (22) are connected in the same way.

3. Overvoltage protector (8) according to Claim 1 or 2, **characterized**
**in that** the first input (54) has a signal level when there is an overvoltage between the first terminal (12) and the second terminal (14).

4. Overvoltage protector (8) according to one of Claims 1 to 3,
**characterized**
**in that** a start output (60) of the shift register (20) is free.

5. Overvoltage protector (8) according to one of Claims 1 to 4,
**characterized**
**in that** a reset input (66) of the shift register (20) is led to a final output (62) of the shift register (20) and/or a voltage supply source (72).

6. Overvoltage protector (8) according to one of Claims 1 to 5,
**characterized**
**in that** a third input (52) of at least one of the OR logic switches (40, 42, 44, 46, 48) is led to an output (50) of another of the OR logic switches (40, 42, 44, 46, 48).

7. Circuit (2) comprising a device (4) to be protected, in particular a cellular transponder, and comprising an overvoltage protector (8) according to one of Claims 1 to 6, which is connected in parallel with the device (4) to be protected.

8. Use of an overvoltage protector (8) according to one of Claims 1 to 6 for protecting a device (4) to be protected from an overvoltage and/or a pulsed current.

9. Method (132) for operating an overvoltage protector (8) according to one of Claims 1 to 6, in which
- an overvoltage is detected, and
- the switching element (28) is closed for a period of time.

## Revendications

1. Dispositif de protection contre les surtensions (8) destiné à protéger un appareil (4) à protéger, ledit dispositif comprenant une première borne (12) et une deuxième borne (14) entre lesquelles un certain nombre de conducteurs (22) sont montés en parallèle les uns aux autres,
- chaque conducteur (22) comporte une résistance (26),
- chacun des conducteurs (22) comprenant un élément de commutation (28) qui est monté en série avec la résistance (26) du conducteur (22),
- chaque élément de commutation (28) comportant une entrée de commande (36),
**caractérisé en ce que**
- l'entrée de commande (36) de chacun des éléments de commutation (28) est reliée à une sortie (50) d'un circuit logique OU (40, 42, 44, 46, 48),
- une première entrée (54) de chaque circuit logique OU (40, 42, 44, 46, 48) est reliée à la première borne (12),
- la première entrée (54) de chaque circuit logique OU (40, 42, 44, 46, 48) est amenée à une première entrée (110) d'un autre circuit logique OU (108) et une sortie de temps (102) d'une horloge (18) est amenée à une deuxième entrée (106) de l'autre circuit logique OU (108), et une sortie (112) de l'autre circuit logique OU (108) est amenée à une entrée de temps (68) d'un registre à décalage (20), et
- une deuxième entrée (56) de chaque circuit logique OU (40, 42, 44, 46, 48) est amenée à une sortie (58) du registre à décalage (20).

2. Dispositif de protection contre les surtensions (8) selon la revendication 1,
**caractérisé en ce que**
les conducteurs (22) ont le même montage.

3. Dispositif de protection contre les surtensions (8) selon la revendication 1 ou 2,
**caractérisé en ce que**
la première entrée (54) présente un niveau lorsqu'une surtension est présente entre la première borne (12) et la deuxième borne (14).

4. Dispositif de protection contre les surtensions (8) selon l'une des revendications 1 à 3,
**caractérisé en ce que**
une sortie de démarrage (60) du registre à décalage (20) est libre.

5. Dispositif de protection contre les surtensions (8) selon l'une des revendications 1 à 4,
**caractérisé en ce que**
une entrée de réinitialisation (66) du registre à décalage (20) est amenée à une sortie d'extrémité (62) du registre à décalage (20) et/ou à une source d'alimentation en tension (72).

6. Dispositif de protection contre les surtensions (8) selon l'une des revendications 1 à 5,
**caractérisé en ce que**
une troisième entrée (52) d'au moins un des circuits logiques OU (40, 42, 44, 46, 48) est amenée à une sortie (50) d'un autre des circuits logiques OU (40, 42, 44, 46, 48).

7. Circuit (2) comprenant un appareil (4) à protéger, notamment un transpondeur de radiotéléphonie mobile, et un dispositif de protection contre les surtensions (8) selon l'une des revendications 1 à 6, qui est monté en parallèle avec l'appareil (4) à protéger.

8. Utilisation d'un dispositif de protection contre les surtensions (8) selon l'une des revendications 1 à 6 pour protéger un appareil (4) à protéger contre une surtension et/ou un courant impulsionnel.

9. Procédé (132) de fonctionnement d'un dispositif de protection contre les surtensions (8) selon l'une des revendications 1 à 6, procédé dans lequel
- une surtension est détectée, et
- l'élément de commutation (28) est fermé pendant un certain temps.
